# EUROPÄISCHE PATENTSCHRIFT

(11) **EP 2 917 667 B1**
(45) Veröffentlichungstag und Bekanntmachung des Hinweises auf die Patenterteilung: **15.04.2020**
(21) Anmeldenummer: 14793774.2
(22) Anmeldetag: 19.09.2014
(51) Int. Cl.: F26B 3/30, F26B 11/04

(54) **VERFAHREN ZUR DEKONTAMINATION VON NAHRUNGS- UND/ODER FUTTERMITTELSCHÜTTGUT**
PROCESS FOR DECONTAMINATING FOODSTUFF
PROCÉDÉ POUR LA DÉCONTAMINATION DE PRODUITS ALIMENTAIRES

(30) Priorität: 08.11.2013 DE 102013222762; 22.11.2013 DE 102013223929
(43) Veröffentlichungstag der Anmeldung: 16.09.2015
(73) Patentinhaber: Kreyenborg GmbH & Co. KG, 48308 Senden (DE)
(72) Erfinder: KRAUSS, Siegfried, 98617 Meiningen (DE)
(74) Vertreter: Tarvenkorn, Oliver
(86) Internationale Anmeldenummer: PCT/DE2014/200491
(87) Internationale Veröffentlichungsnummer: WO 2015/067255

(56) Entgegenhaltungen:
- WO-A1-03/043665
- CN-A- 101 785 514
- JP-A- 2001 086 932
- JP-A- 2002 059 131
- JP-A- 2011 250 725
- KR-A- 20090 097 546
- US-A- 3 672 956
- US-A1- 2004 062 832

## Beschreibung

Die Erfindung betrifft ein Verfahren zur Dekontamination von Nahrungs- und/oder Futtermittelschüttgut, insbesondere von Nahrungs- und/oder Futtermittelrohstoffen mit den Merkmalen des Oberbegriffs des Anspruchs 1

Die Kontamination von Nahrungs- bzw. Futtermitteln kann durch unterschiedliche Faktoren verursacht werden. In Betracht hierfür kommen bspw. der bewusste Einsatz von Pestiziden, Fungiziden oder Mitteln zum Vorratsschutz. Ferner können die Nahrungs- und Futtermittel durch belastete Böden, Schimmelpilz- oder Schädlingsbefall kontaminiert sein.

Aufgrund der wachsenden Weltbevölkerung nimmt die Umweltverschmutzung und damit die Kontamination der Nahrungs- und Futtermitteln immer weiter zu. Daher werden in den letzten Jahren Gesetzgeber, Hersteller und Verbraucher stark für die Problematik kontaminierter Nahrungsmittel sensibilisiert. Die weltweiten unbelasteten Anbauflächen nehmen trotz Bio-Zertifizierung rapide ab, die Ansprüche an Qualität, Preis, Menge und ein nahezu normiertes Aussehen der Nahrungs- und/oder Futtermittel seitens der Industrie und der Verbraucher zwingt die Erzeuger zum Einsatz immer weiterer Chemikalien.

Aufgrund der globalen Beschaffungs- und Absatzmärkte mit all ihren unterschiedlichen Metalitäten, Traditionen, Normen und Gesetzen, verschärft sich diese Problematik zusehends. Ferner werden die Analysemöglichkeiten der Nahrungs- und/oder Futtermittel immer weiter verbessert und die Grenzwerte, die diese Waren nicht überschreiten dürfen, durch den Gesetzgeber nach und nach verringert. Somit besteht ein erheblicher Bedarf, durch Keime oder Toxine kontaminierte Ware, die den zulässigen Grenzwert überschreitet, derart zu behandeln, dass diese nicht verworfen werden muss.

JP 2001086932 A offenbart ein Verfahren zur Behandlung von Teeblättern.

Ein Verfahren zu Dekontamination von Nahrungs- und/oder Futtermitteln, das die genannten Kontaminanten so weit reduziert, dass die Nahrungs- und/oder Futtermittel verwertet werden können, ist bisher nicht bekannt. Daher werden ganze Chargen von Nahrungs- und/oder Futtermitteln entsorgt, wenn bei einer gezogenen Probe die zulässigen Grenzwerte überschritten sind.

Der vorliegenden Erfindung liegt daher die Aufgabe zugrunde, ein Verfahren zur Dekontamination von Nahrungs- und/oder Futtermittelschüttgut der eingangs genannten Art derart auszugestalten, dass mit möglichst einfachen Mitteln eine Reduzierung der Kontamination erreicht wird, so dass die Nahrungs- und/oder Futtermittel die vorgegebenen Grenzwerte nicht überschreiten und somit der weiteren Verwertung zugeführt werden können.

Erfindungsgemäß wird die voranstehende Aufgabe durch die Merkmale des Patentanspruchs 1 gelöst.

Zunächst sei darauf hingewiesen, dass zur Vereinfachung von Schüttgut die Rede ist, wobei darunter Nahrungs- und/oder Futtermittelschüttgut zu verstehen ist.

In erfindungsgemäßer Weise ist zunächst erkannt worden, dass die zugrundeliegende Aufgabe in verblüffend einfacher Weise durch eine geschickte Behandlung des Nahrungs- und/oder Futtermittelschüttguts in einem Drehrohr trockner gelöst werden kann. Dazu wird das Schüttgut in den Drehrohrtrockner eingegeben und mittels Infrarotstrahlung bis zu einem definierten Behandlungstemperaturbereich erhitzt. Während dieses Vorgangs wird das Schüttgut rotiert. Durch die Rotierung des Schüttguts ist gewährleistet, dass die einzelnen Partikel jeweils gleichmäßig durch die Infrarotstrahlung erhitzt werden. Die Infrarotstrahlung hat den Vorteil, dass das Schüttgut von Innen heraus erwärmt und die verdampfende Feuchtigkeit nach außen weggetragen wird. Somit ist mit geringem Energieeinsatz und bei schonender Behandlung des Nahrungs- und/oder Futtermittels das Ausdampfen von Kontaminanten ermöglicht. Ferner werden Keime, Hefen und Schimmelpilze durch die Infrarotstrahlung abgetötet.

Mit Erreichen des Behandlungstemperaturbereichs wird die Schüttguttemperatur mittels der Infrarotstrahlung in diesem Bereich gehalten, wobei gleichzeitig das Schüttgut weiter rotiert wird. Durch die Infrarotstrahlung werden dabei Kontaminanten, bspw. Pflanzenschutzmittel und andere Schadstoffe, aus dem Schüttgut heraus gedampft und des Weiteren die Keim-, Hefen- und Schimmelbelastung reduziert.

Zur schnelleren Erhöhung der Schüttguttemperatur wird Wasser in den Drehrohrtrockner eingesprüht. Das Wasser kann dabei bspw. als Wasseraerosol oder gesättigter Dampf eingesprüht werden. Des Weiteren ist denkbar, dass das Wasser erhitzt worden ist, d.h. dass die Wassertemperatur über der Schüttguttemperatur liegt. Dabei ist es von besonderem Vorteil, dass nach der Erfindung das Wasser, Wasseraerosol oder der gesättigter Dampf über eine im Lichtkegel des Infrarot- und/oder Ultraviolett-Strahlers installierte dampfführende Injektionsinstallation bzw. über eine im Lichtkegel des Infrarot- und/oder Ultraviolett-Strahlers installierte Vorrichtung zur Wassereinsprühung eingesprüht wird. Dadurch wird die Wirkung eines Dampftrockners bzw. Nachheizers erzeugt.

Im Anschluss wird die Schüttguttemperatur auf eine Ausgabetemperatur reduziert, wobei gleichzeitig das Schüttgut rotiert wird. Schließlich wird das dekontaminierte Schüttgut aus dem Drehrohrtrockner ausgegeben. Der Behandlungstemperaturbereich, die Dauer der Behandlungsphase, sowie die weiter angegebenen Parameter können in Abhängigkeit der zu dekontaminierenden Nahrungs- und/oder Futtermittel sowie der vorhandenen Kontaminanten jeweils angepasst werden.

An dieser Stelle sei darauf hingewiesen, dass der Begriff Dekontamination im weitesten Sinne zu verstehen ist. Dieser umfasst nämlich die Reduzierung der Belastung von Nahrungs- und/oder Futtermittelschüttgut mit mikrobiologischen Verunreinigungen und/oder Keimbelastungen und/oder Hefen und/oder Schimmelpilzen und/oder Schädlingen bzw. deren Ausscheidungen und/oder Mykotoxinen und/oder Rückständen von Pflanzenschutzmitteln und/oder beliebigen anderen Stoffen, die für Mensch und/oder Tier schädlich sind.

Bei dem Nahrungs- und/oder Futtermittelschüttgut kann es sich um Gewürze - bspw. Pfeffer - und/oder Tee und/oder Kaffee und/oder Kräuter und/oder Pilze und/oder Gemüse - bspw. Schnittlauch - handeln. Diese können pulvrig bis feinstückig mit einem beliebigen Durchmesser, bspw. von 500 µm bis 5 cm vorliegen.

In vorteilhafter Weise emittiert der Infrarotstrahler nahes Infrarot mit einer Wellenlänge im Bereich von 0,78 bis 3,0 µm und/oder mittleres Infrarot mit einer Wellenlänge im Bereich von 3 bis 50 µm. Des Weiteren ist denkbar, dass das Schüttgut mit mehreren Infrarotstrahlern behandelt wird, die Infrarotstrahlen mit unterschiedlichen Wellenlängen emittieren.

In vorteilhafter Weise wird das Schüttgut zusätzlich mittels mindestens eines Ultraviolett-Strahlers behandelt. Hierdurch wird einerseits die Ausdampfung weiterer Kontaminanten ermöglicht und andererseits werden etwaige Keime, Sporen, Hefen, Schimmelpilze oder Schädlinge vernichtet.

In besonders raffinierter Weise wird die Schüttguttemperatur während einer Anreizphase in einem Anreiztemperaturbereich gehalten. Dadurch werden die Sporen von sporenbildenden Keimen zur Keimung angereizt. Im Gegensatz zu den Sporen sind Keime wesentlich leichter abzutöten. Die gekeimten Sporen können daher in einem der folgenden Verfahrensschritte in einfacher und zuverlässiger Weise vernichtet werden.

In weiter vorteilhafter Weise kann das Schüttgut zur Einstellung einer definierten Restfeuchte mittels des Infrarot- und/oder Ultraviolett-Strahlers nachgetrocknet werden. Die Nachtrocknung kann dabei vor, während oder nach der Abkühlung auf die Ausgabetemperatur erfolgen. Das Schüttgut wird folglich in einem Arbeitsgang dekontaminiert und lagerstabil getrocknet. Somit ist ein Rohstoffkonzentrat geschaffen, das ohne den Einsatz von Konservierungsstoffen, Kältetechnik, thermischer Energie oder Spezialverpackungen lagerstabil vorliegt und unproblematisch zu transportieren ist.

Des Weiteren ist denkbar, dass das Schüttgut vor, während oder nach der Abkühlung vakuumbehandelt wird. Durch diesen Verfahrensschritt wird eine weitere keimabtötende bzw. schädlingsabtötende Behandlung realisiert und des Weiteren das Schüttgut in idealer Weise für die Lagerung vorbereitet.

Um auf besonders schonende Weise das Ausgasen von Kontaminanten zu ermöglichen, kann während der Behandlungsphase die Schüttguttemperatur kurzzeitig über den Behandlungstemperaturbereich erhöht werden. Diese kurzzeitige Schüttguttemperaturerhöhung kann auch intervallmäßig mehrfach wiederholt werden, so dass die Schüttguttemperatur während der Behandlungsphase mehrmals über den Behandlungstemperaturbereich ansteigt.

Um das Schüttgut zu schonen, kann die Schüttguttemperatur während der Behandlungsphase unter den Behandlungstemperaturbereich verringert werden. In vorteilhafter Weise wird die Schüttguttemperatur während der Behandlungsphase intervallmäßig mehrfach wiederholt unter den Behandlungstemperaturbereich verringert. Insbesondere bei empfindlichen Nahrungsmitteln wie bspw. Schnittlauch wird dadurch eine schonende Dekontamination gewährleistet.

Des Weiteren ist denkbar, die Schüttguttemperatur während der Behandlungsphase abwechselnd kurzzeitig über den Behandlungstemperaturbereich zu erhöhen und danach unter den Behandlungstemperaturbereich zu verringern oder erst zu verringern und danach zu erhöhen.

Diese Wechsel der Schüttguttemperatur können auch mehrfach hintereinander durchgeführt werden. Somit werden Kontaminanten aus dem Schüttgut ausgegast, während das Schüttgut in idealer Weise geschont wird.

Die Schüttguttemperatur kann außerdem durch eine Änderung der Intensität des Infrarot- und/oder Ultraviolett-Strahlers beeinflusst werden.

Je nachdem, um was für ein Nahrungs- und/oder Futtermittel es sich handelt, kann es vorteilhaft sein, dieses vor dem Eingeben in den Drehrohrtrockner und/oder während der Dekontamination in dem Drehrohrtrockner zu befeuchten. Dadurch wird eine zu starke Erhitzung und eine damit einhergehende Zerstörung des Nahrungs- und/oder Futtermittelschüttguts verhindert.

In weiter vorteilhafter Weise wird das - vorzugsweise getrocknete - Schüttgut in dem Drehrohrtrockner befeuchtet. Dadurch wird die Zellstruktur des Schüttguts entfaltet, so dass Aromen freigesetzt werden.

Ferner kann das Schüttgut während der Dekontamination mit flüssigen Zusatzstoffen beaufschlagt werden, die dadurch unmittelbar in die Zellstruktur des Schüttguts eingetrocknet werden. In vorteilhafter Weise wird das Schüttgut vor und/oder während der Behandlungsphase mit den flüssigen Zusatzstoffen beaufschlagt.

Um die Dekontamination zu beschleunigen, kann das Schüttgut zu Beginn des Verfahrens für eine geringe Zeit über den Behandlungstemperaturbereich aufgeheizt werden (sog. "Aufheiz-Peak"). Dadurch wird die Dauer der Dekontamination verringert. Eine geringere Dauer der Dekontamination hat sich als besonders vorteilhaft für die Qualität des behandelten Schüttguts erwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: ein Ablaufprotokoll der Dekontamination von Schnittlauch als Nahrungsmittelschüttgut und
- Fig. 2: den Temperaturverlauf des Schüttguts bei der Dekontamination des Schüttguts gemäß Fig. 1.

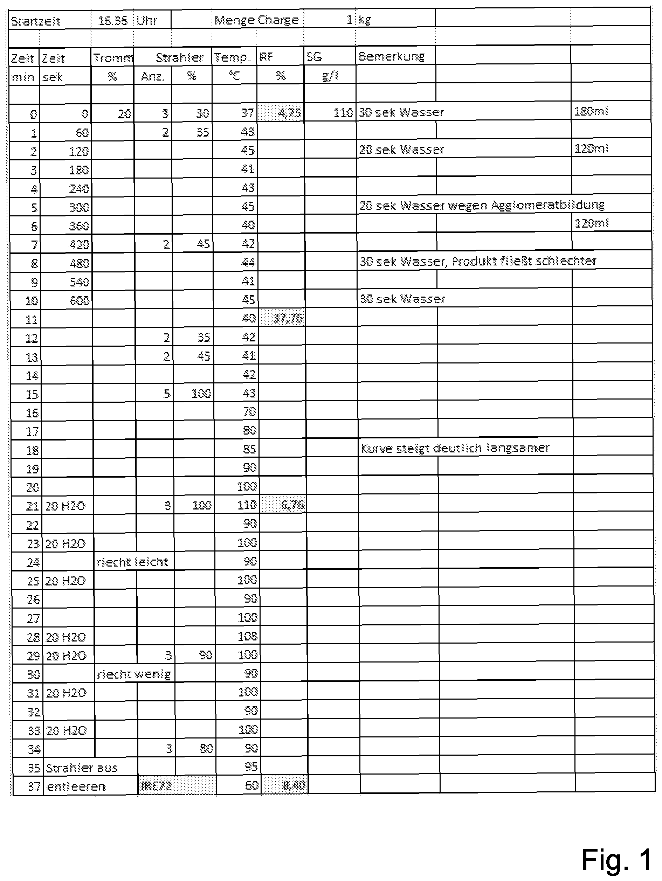

Fig. 1 zeigt die Dekontamination von Schnittlauch, das getrocknet mit einem Durchmesser von 1 bis 2,5 mm als Schüttgut vorliegt.

Wie dem Protokoll aus Fig. 1 zu entnehmen ist, wird das Schüttgut mit einer vorab festgelegten Infrarot-Strahlungsintensität auf den gewünschten Behandlungstemperaturbereich in dem Drehrohrtrockner aufgeheizt. Im hier vorliegenden Ausführungsbeispiel liegt der Behandlungstemperaturbereich bei ca. 93 °C bis 96 ° C. Um das Schüttgut zu schützen und zur schnelleren Erhöhung der Schüttguttemperatur wird während des Aufheizens des Schüttguts Wasser auf das Schüttgut aufgesprüht.
Um etwaige Sporen von sporenbildenden Keimen zur Keimung anzuregen, wird die Schüttguttemperatur bevor der Behandlungstemperaturbereich erreicht ist, während einer Anreizphase in einem Anreiztemperaturbereich gehalten. Somit keimen die Sporen aus und können daher leichter abgetötet werden.

Nach ca. 1300 Sekunden hat die Schüttguttemperatur den Behandlungstemperaturbereich erreicht. Während der Behandlungsphase werden die Kontaminanten bzw. Schadstoffe aus dem Schüttgut ausgedampft, so dass das Schüttgut dekontaminiert wird.

Im hier dargestellten Beispiel wird die Schüttguttemperatur kurzfristig über den Behandlungstemperaturbereich bis auf ca. 125 °C erhöht (sog. "Aufheiz-Peak"). Durch dieses schnelle Aufheizen verringert sich die Dauer der Dekontamination, was sich besonders produktschonend auswirkt.

Im Anschluss daran wird die Schüttguttemperatur während der Behandlungsphase in dem Behandlungstemperaturbereich gehalten, wobei intervallmäßig die Schüttguttemperatur kurzzeitig über den Behandlungstemperaturbereich erhöht wird. Dadurch wird die Ausgasung von Schadstoffen aus dem Schüttgut erhöht, wobei der besonders empfindliche Schnittlauch in idealer Weise vor zu hohen Temperaturen geschützt wird.

Nach ca. 2100 Sekunden wird das Schüttgut auf die Austrittstemperatur von ca. 50°C abgekühlt. Das abgekühlte und dekontaminierte Schüttgut wird schließlich aus dem Drehrohrtrockner entnommen.

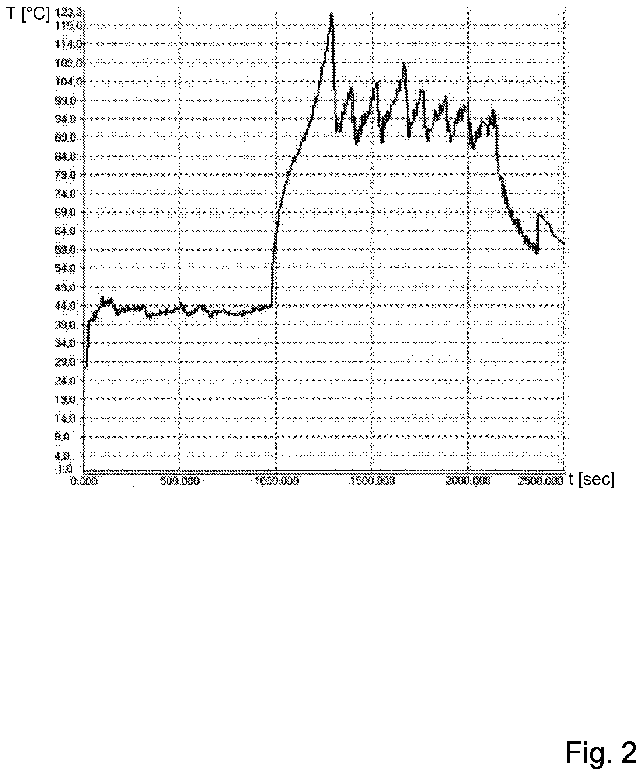

Fig. 2 zeigt die Schüttguttemperatur bei der Dekontamination von Schnittlauch gemäß Fig. 1 als Funktion der Zeit. Aus Fig. 2 ist deutlich die Erhöhung der Schüttguttemperatur bis über die den Behandlungstemperaturbereich - Aufheiz-Peak - zu erkennen. Die Behandlungsphase beginnt bei ca. 1300 Sekunden und endet bei ca. 2100 Sekunden. Während der Behandlungsphase wird die Schüttguttemperatur im Behandlungstemperaturbereich gehalten und intervallmäßig für kurze Zeit jeweils über den Behandlungstemperaturbereich erhöht. Zur Vermeidung von Wiederholungen sei an dieser Stelle auf die Ausführungen zu Fig. 1 verwiesen.

## Patentansprüche

1. Verfahren zur Dekontamination von Nahrungs- und/oder Futtermittelschüttgut, insbesondere von Nahrungs- und/oder Futtermittelrohstoffen, mit folgenden Verfahrensschritten:
- Eingeben des Schüttguts in einen Drehrohrtrockner,
- Erhöhung der Schüttguttemperatur mittels mindestens eines Infrarot-Strahlers bis zu einem definierten Behandlungstemperaturbereich bei gleichzeitiger Rotierung des Schüttguts,
- Halten der Schüttguttemperatur in dem Behandlungstemperatur-bereich während einer Behandlungsphase mittels des Infrarot-Strahlers bei gleichzeitiger Rotierung des Schüttguts,
Verringerung der Schüttguttemperatur auf eine Ausgabetemperatur bei gleichzeitiger Rotierung des Schüttguts,
- Ausgabe des Schüttguts aus dem Drehrohrtrockner,
**dadurch gekennzeichnet, dass** zur schnelleren Erhöhung der Schüttguttemperatur über eine Vorrichtung zur Dampf- oder Wassereinsprühung im Drehrohrtrockner Wasser, vorzugsweise als Wasseraerosol oder als gesättigter Dampf, in den Lichtkegel des Infrarot- und/oder Ultraviolett-Strahlers eingesprüht wird.

2. Verfahren nach Anspruch 1, **dadurch gekennzeichnet, dass** das Schüttgut zusätzlich mittels mindestens eines Ultraviolett-Strahlers behandelt wird.

3. Verfahren nach Anspruch 1 oder 2, **dadurch gekennzeichnet, dass** die Schüttguttemperatur während einer Anreizphase in einem Anreiztemperaturbereich gehalten wird,

4. Verfahren nach einem der Ansprüche 1 bis 3,
**dadurch gekennzeichnet,**
**dass** das Schüttgut zur Einstellung einer definierten Restfeuchte vor, während oder nach der Abkühlung auf die Ausgabetemperatur mittels des mindestens einen Infrarot- und/oder Ultraviolett-Strahlers nachgetrocknet wird.

5. Verfahren nach einem der Ansprüche 1 bis 4,
**dadurch gekennzeichnet,**
**dass** das Schüttgut vor, während oder nach der Abkühlung vakuumbehandelt wird.

6. Verfahren nach einem der Ansprüche 1 bis 5,
**dadurch gekennzeichnet,**
**dass** die Schüttguttemperatur während der Behandlungsphase über den Behandlungstemperaturbereich erhöht wird.

7. Verfahren nach einem der Ansprüche 1 bis 6,
**dadurch gekennzeichnet,**
**dass** die Schüttguttemperatur während der Behandlungsphase unter den Behandlungstemperaturbereich verringert wird.

8. Verfahren nach einem der Ansprüche 1 bis 7,
**dadurch gekennzeichnet,**
**dass** die Schüttguttemperatur durch eine Änderung der Intensität des mindestens einen Infrarot- und/oder Ultraviolett-Strahlers beeinflusst wird.

9. Verfahren nach einem der Ansprüche 1 bis 8,
**dadurch gekennzeichnet,**
**dass** das Schüttgut vor dem Eingeben in den Drehrohrtrockner und/oder während der Dekontamination in dem Drehrohrtrockner befeuchtet wird.

10. Verfahren nach einem der Ansprüche 1 bis 9,
**dadurch gekennzeichnet,**
**dass** das Schüttgut in dem Drehrohrtrockner zur Entfaltung der Zellstruktur und damit zur Freisetzung des Aromas, befeuchtet wird.

11. Verfahren nach einem der Ansprüche 1 bis 10,
**dadurch gekennzeichnet,**
**dass** das Schüttgut während der Dekontamination mit flüssigen Zusatzstoffen beaufschlagt wird, die dadurch unmittelbar in die Zellstruktur des Schüttguts eingetrocknet werden.

## Claims

1. Method for decontaminating bulk food and/or feed material, in particular raw food and/or feed materials, comprising the following method steps:
- introducing the bulk material into a rotary tube dryer,
- increasing the temperature of the bulk material by means of at least one infrared emitter up to a defined treatment temperature range while at the same time rotating the bulk material,
- maintaining the temperature of the bulk material in the treatment temperature range during a treatment phase by means of the infrared emitter while at the same time rotating the bulk material,
- reducing the temperature of the bulk material to a discharge temperature while at the same time rotating the bulk material,
- discharging the bulk material from the rotary tube dryer,
**characterized in that**, for quickly increasing the temperature of the bulk material, water is sprayed, preferably as a water aerosol or as saturated steam, into the light cone of the infrared and/or ultraviolet emitter by means of a device for spraying in steam or water.

2. Method according to Claim 1, **characterized in that** the bulk material is additionally treated by means of at least one ultraviolet emitter.

3. Method according to Claim 1 or 2, **characterized in that**, during a stimulating phase, the temperature of the bulk material is kept in a stimulating temperature range.

4. Method according to one of Claims 1 to 3, **characterized in that**, for setting a defined residual moistness, before, during or after the cooling to the discharge temperature, the bulk material is re-dried by means of the at least one infrared and/or ultraviolet emitter.

5. Method according to one of Claims 1 to 4, **characterized in that**, before, during or after the cooling, the bulk material is vacuum-treated.

6. Method according to one of Claims 1 to 5, **characterized in that**, during the treatment phase, the temperature of the bulk material is increased beyond the treatment temperature range.

7. Method according to one of Claims 1 to 6, **characterized in that**, during the treatment phase, the temperature of the bulk material is reduced below the treatment temperature range.

8. Method according to one of Claims 1 to 7, **characterized in that** the temperature of the bulk material is influenced by changing the intensity of the at least one infrared and/or ultraviolet emitter.

9. Method according to one of Claims 1 to 8, **characterized in that** the bulk material is moistened before being introduced into the rotary tube dryer and/or during the decontamination in the rotary tube dryer.

10. Method according to one of Claims 1 to 9, **characterized in that** the bulk material is moistened in the rotary tube dryer to open up the cell structure and thereby release the aroma.

11. Method according to one of Claims 1 to 10, **characterized in that**, during the decontamination, liquid additives are applied to the bulk material, thereby drying them directly into the cell structure of the bulk material.

## Revendications

1. Procédé de décontamination de produits alimentaires et/ou de fourrage en vrac, notamment des matières premières de produits alimentaires et/ou de fourrage, comprenant les étapes suivantes :
- introduction du produit en vrac dans un séchoir tubulaire rotatif,
- augmentation de la température du produit en vrac au moyen d'au moins un émetteur d'infrarouges jusqu'à une plage de températures de traitement définie avec rotation simultanée du produit en vrac,
- maintien de la température du produit en vrac dans la plage de températures de traitement pendant une phase de traitement au moyen de l'émetteur d'infrarouges avec rotation simultanée du produit en vrac,
- réduction de la température du produit en vrac à une température de délivrance avec rotation simultanée du produit en vrac,
- délivrance du produit en vrac hors du séchoir tubulaire rotatif,
**caractérisé en ce qu'**en vue d'augmenter plus rapidement la température du produit en vrac, de l'eau, de préférence sous la forme d'aérosol d'eau ou sous la forme de vapeur saturée, est pulvérisée dans le cône lumineux de l'émetteur d'infrarouges et/ou d'ultraviolets par le biais d'un dispositif de pulvérisation de vapeur ou d'eau dans le séchoir tubulaire rotatif.

2. Procédé selon la revendication 1, **caractérisé en ce que** le produit en vrac est en plus traité au moyen d'au moins un émetteur d'ultraviolets.

3. Procédé selon la revendication 1 ou 2, **caractérisé en ce que** la température du produit en vrac est maintenue dans une plage de températures de stimulation pendant une phase de stimulation.

4. Procédé selon l'une des revendications 1 à 3, **caractérisé en ce qu'**en vue de régler une humidité résiduelle définie, le produit en vrac est soumis à un séchage final au moyen de l'au moins un émetteur d'infrarouges et/ou d'ultraviolets avant, pendant ou après le refroidissement à la température de délivrance.

5. Procédé selon l'une des revendications 1 à 4, **caractérisé en ce que** le produit en vrac est traité sous vide avant, pendant ou après le refroidissement.

6. Procédé selon l'une des revendications 1 à 5, **caractérisé en ce que** la température du produit en vrac est augmentée au-dessus de la plage de températures de traitement pendant la phase de traitement.

7. Procédé selon l'une des revendications 1 à 6, **caractérisé en ce que** la température du produit en vrac est réduite au-dessous de la plage de températures de traitement pendant la phase de traitement.

8. Procédé selon l'une des revendications 1 à 7, **caractérisé en ce que** la température du produit en vrac est influencée par une modification de l'intensité de l'au moins un émetteur d'infrarouges et/ou d'ultraviolets.

9. Procédé selon l'une des revendications 1 à 8, **caractérisé en ce que** le produit en vrac est humidifié avant l'introduction dans le séchoir tubulaire rotatif et/ou pendant la décontamination dans le séchoir tubulaire rotatif.

10. Procédé selon l'une des revendications 1 à 9, **caractérisé en ce que** le produit en vrac est humidifié dans le séchoir tubulaire rotatif en vue de déployer la structure cellulaire et ainsi en vue de libérer l'arôme.

11. Procédé selon l'une des revendications 1 à 10, **caractérisé en ce que** le produit en vrac est chargé avec des additifs liquides pendant la décontamination, lesquels sont ainsi directement incorporés par séchage dans la structure cellulaire du produit en vrac.
